## Europäisches Patentamt
## European Patent Office
## Office européen des brevets

(19)

(11) Veröffentlichungsnummer: **0 035 784**
**B1**

(12)

# EUROPÄISCHE PATENTSCHRIFT

(45) Veröffentlichungstag der Patentschrift:
09.02.83

(51) Int. Cl.³: **C 04 B 35/64,** B 22 F 3/04,
**C 04 B 35/58**

(21) Anmeldenummer: **81101706.0**

(22) Anmeldetag: **09.03.81**

(54) Verfahren zur Herstellung von praktisch porenfreien polykristallinen Formkörpern durch isostatisches Heisspressen.

(30) Priorität: **11.03.80  DE 3009240**

(43) Veröffentlichungstag der Anmeldung:
**16.09.81 Patentblatt 81/37**

(45) Bekanntmachung des Hinweises auf die Patenterteilung:
**09.02.83 Patentblatt 83/6**

(84) Benannte Vertragsstaaten:
**AT BE DE FR GB IT SE**

(56) Entgegenhaltungen:
**DE-A-2 702 073**
**DE-B-2 327 273**
**DE-B-2 601 294**

(73) Patentinhaber: **Elektroschmelzwerk Kempten GmbH,
Herzog-Wilhelm-Strasse 16, D-8000 München 2 (DE)**

(72) Erfinder: **Hunold, Klaus, Dr. Dipl.-Chem., Hirschdorfer
Weg 3, D-8960 Kempten (DE)**
Erfinder: **Reinmuth, Klaus, Dr. Dipl.-Chem., An der
Halde 21, D-8961 Durach (DE)**
Erfinder: **Lipp, Alfred, Dr. Dipl.-Ing.,
Bürgermeister-Singer-Strasse 15, D-8939 Bad
Wörishofen (DE)**
Erfinder: **Napholcz, Johannes, Finkenweg 32,
D-8960 Kempten (DE)**
Erfinder: **Arnold, Peter, Ahornstrasse 10,
D-8961 Sulzberg (DE)**

## Verfahren zur Herstellung von praktisch porenfreien polykristallinen Formkörpern durch isostatisches Heißpressen

Gegenstand der Erfindung ist ein Verfahren zur Herstellung von praktisch porenfreien Formkörpern aus polykristallinem Material, bei dem aus pulverförmigen Werkstoffen vorgeformte Körper, die zur Oberfläche offene Poren aufweisen, in einer vakuumdicht geschlossenen Hülle aus glas- oder keramikartigem Material im Hochdruckautoklaven unter Verwendung eines inerten Gases als Druckübertragungsmedium isostatisch heißgepreßt werden.

Es ist bekannt, daß vorgeformte Körper aus pulverförmigen Werkstoffen durch isostatisches Heißpressen hoch- bzw. nachverdichtet werden können unter Erzielung von praktisch porenfreien polykristallinen Formkörpern, deren Dichte bis zu 100% der theoretischen Dichte erreichen kann.

Werden vorgeformte Körper mit offener Porosität, das heißt, mit zur Oberfläche offenen Poren dem isostatischen Heißpreßvorgang unterzogen, ist es notwendig, diese mit einer gasdichten Hülle zu versehen, um zu verhindern, daß das als Druckübertragungsmedium verwendete Gas in die offenen Poren der Körper eindringt und die Verdichtung stört.

Für die Auswahl eines geeigneten Hüllmaterials sind hohe Duktilität bei der Preßtemperatur und gute Verträglichkeit mit dem Material des vorgeformten Körpers von entscheidender Bedeutung. Diesen Anforderungen genügen beispielsweise Hüllen aus Metall, die für diesen Verwendungszweck seit langem bekannt sind. Da aber Metallhüllen nur in geometrisch einfachen Formen wirtschaftlich vorgefertigt werden können und außerdem das nicht vermeidbare Verschweißen der Hülle mit dem Körper während des Preßvorgangs eine aufwendige Nachbehandlung der Endprodukte erforderlich macht, wurde die sogenannte Glaskapseltechnik entwickelt. Dabei können vorgefertigte Glaskapseln verwendet werden, die den Abmessungen des vorgeformten Körpers nicht genau angepaßt sind (vgl. DE-B-2 346 499, die der GB-A-1 441 330 entspricht, und DE-A-2 548 740, die der GB-A-1 522 705 entspricht), wobei der Raum zwischen Glaskapsel und vorgeformtem Körper zusätzlich mit einem Glaspulver ausgefüllt werden kann, das eine höhere Erweichungstemperatur hat als die Kapsel selbst (vgl. DE-B-2 601 294, die der GB-A-1 529 966 entspricht). Vor dem Einbringen in die isostatische Heißpresse werden die Kapseln mit Inhalt evakuiert und dann gasdicht verschlossen. Während des Aufheizvorgangs im Hochdruckautoklaven erweichen die Glaskapseln und das gegebenenfalls vorhandene Glaspulver und passen sich den Abmessungen des vorgeformten Körpers an, was aber insbesondere bei kompliziert geformten Körpern zu einer ungleichmäßig dicken Umhüllung führt, die eine ungleichmäßige Verdichtung des Körpers zur Folge hat. Außerdem kann das Glasmaterial in die Oberflächenporen der Körper eingepreßt werden, wodurch die Beschaffenheit der Formkörperoberfläche beeinträchtigt wird.

Anstelle des Einbringens in vorgefertigte Glaskapseln können vorgeformte Körper auch direkt mit einer Glas- oder glasähnlichen Masse beschichtet werden, beispielsweise durch Flamm- oder Plasmaspritzen oder durch Eintauchen unter Bildung einer porösen Oberflächenschicht, die dann durch Erhitzen unter vermindertem Druck zu einer gasdichten Umhüllung geschmolzen wird (vgl. DE-B-2 208 250, die der GB-A-1 374 033 entspricht), wobei die Druckanwendung bereits dann erfolgen kann, wenn sich die Oberflächenschicht im hochviskosen Zustand befindet. Damit kann zwar eine relativ dünne Umhüllung von gleichmäßiger Dicke erzeugt werden, die aber bei vorgeformten Körpern, die eine hohe Verdichtungstemperatur benötigen, aus einer hochschmelzenden glasartigen Masse bestehen muß, um zu verhindern, daß die Umhüllung vorzeitig abläuft oder in den Körper eindringt. Das hat aber den Nachteil, daß die Oberflächenschicht erst bei ziemlich hoher Temperatur gasdicht wird.

Für vorgeformte Körper, z. B. aus Siliciumnitrid, die eine hohe Verdichtungstemperatur erfordern, ist daher ein Verfahren bekanntgeworden, bei dem auf den vorgeformten Körper zwei poröse Schichten aufgetragen werden, wobei die innere, direkt auf den Körper aufgetragene Schicht aus einem hochschmelzenden glasbildenden Material oder Metall und die äußere Schicht aus einem niedrigschmelzenden glasbildenden Material besteht. Durch Erhitzen unter vermindertem Druck wird zuerst die äußere Schicht gasdicht geschmolzen, dann erfolgt bereits die Druckanwendung mit zunehmender Temperatur, so daß der Körper vor und während der erforderlichen Verdichtungstemperatur immer von einer gasdichten Hülle umschlossen ist (vgl. DE-A-2 702 073, die der US-A-4 112 143 entspricht).

In allen Fällen, in welchen das Hüllmaterial direkt auf die vorgeformten Körper aufgebracht worden ist, kann jedoch aufgrund unterschiedlicher thermischer Ausdehnungskoeffizienten von vorgeformten Körper und Hüllmaterial letzteres während des Aufheizens reißen, wenn es noch nicht plastisch verformbar ist oder wenn es in Form einer Suspension aufgetragen worden ist, die bei der Temperaturerhöhung schwindet. Derartige Risse können häufig beim gasdichten Schmelzen bzw. Sintern der Hüllschicht nicht mehr ausgeheilt werden. Das führt aber zu einem hohen Anteil an defekten Hüllen und damit zu einer hohen Ausschußquote.

Der Erfindung liegt daher die Aufgabe zugrunde, ein Verfahren zur Herstellung von praktisch porenfreien polykristallinen Formkörpern aus vorgeformten Körpern mit zur Oberfläche offenen Poren in einer vakuumdicht geschmolzenen Hülle aus glasartigem Material durch isostatisches Heißpressen im Hochdruckautoklaven unter Verwendung eines inerten Gases als Druckübertragungsmedium zur Verfügung zu stellen, bei dem während des Aufheizens kein Reißen der Hüllschicht auftreten kann, wenn der vorgeformte Körper einen höheren thermischen Ausdehnungskoeffizienten als die Hüllschicht hat oder wenn die Hüllschicht bei der Temperaturerhöhung schwindet.

Diese Aufgabe wird erfindungsgemäß dadurch gelöst, daß auf die vorgeformten Körper eine erste Schicht aus einem organischen Material, das bei Temperaturen bis zu etwa 400°C unter Normaldruck zersetzlich oder schmelzbar ist oder aus einem hitzebeständigen Material, das auf mindestens die Hälfte seines Volumens komprimierbar ist, aufgebracht und darauf eine zweite Schicht aus einem glas- oder keramikartigen Material aufgetragen wird, dann die gehüllten Körper thermisch behandelt werden, bis die zweite Schicht unter Bildung der vakuumdichten Hülle geschmolzen oder gesintert ist und die so vorbehandelten Körper anschließend isostatisch heißgepreßt werden bis zur Bildung der praktisch porenfreien polykristallinen Formkörper.

Bei dem erfindungsgemäßen Verfahren wird demnach das eigentliche Hüllmaterial, das ist die zweite oder äußere Schicht aus dem glas- oder keramikartigen Material, nicht direkt auf den vorgeformten Körper aufgetragen, sondern dazwischen befindet sich die erste oder innere Schicht, die entweder aus dem organischen Material besteht, das geschmolzen oder zersetzt wird und somit einen Hohlraum bildet, wenn die zweite Schicht durch die thermische Behandlung gasdicht geschmolzen oder gesintert wird, oder aus dem zusammendrückbaren Material, so daß der vorgeformte Körper sich während des Aufheizens aufgrund des durch die erste Schicht gebildeten Hohlraums oder aufgrund deren Nachgiebigkeit ausdehnen kann, ohne dabei die zweite oder äußere Schicht zu zerstören, wenn diese noch nicht plastisch verformbar ist.

Bei dem erfindungsgemäßen Verfahren werden vorgeformte Körper eingesetzt, die noch zur Oberfläche offene Poren aufweisen. Diese Körper können aus pulverförmigen Werkstoffen beliebiger Art und Zusammensetzung, wie Metallen, metallischen und nicht-metallischen Hartstoffen, z. B. Boriden, Carbiden, Nitriden und/oder Siliciden, gegebenenfalls zusammen mit bekannten Bindermetallen und/oder Sinterhilfsmitteln, unter Formgebung hergestellt werden. Die Formgebung kann mittels üblicher bekannter Maßnahmen vorgenommen werden, beispielsweise durch Gesenkpressen, isostatische Pressen, Spritzgießen, Strangpressen oder Schlickergießen bei Raumtemperatur oder bei erhöhter Temperatur durch druckloses Sintern oder einfaches Heißpressen. Die Körper sollten nach der Formgebung eine theoretische Dichte von mindestens 50%, vorzugsweise mindestens 60%, aufweisen, damit sie für die nachfolgende Behandlung genügend standfest sind.

Für die Durchführung des erfindungsgemäßen Verfahrens wird auf diese vorgeformten Körper eine erste Schicht aufgebracht, die entweder aus einem organischen Material besteht, das definitionsgemäß bei Temperaturen bis zu 400°C unter Normaldruck zersetzlich oder schmelzbar ist. Es ist nicht unbedingt erforderlich, daß das verwendete organische Material in diesem angegebenen Temperaturbereich sich vollständig zersetzt oder schmilzt. Es muß nur die Hohlraumbildung gewährleistet sein, wenn die zweite Schicht gasdicht geschmolzen oder gesintert wird, wobei ein Kohlenstoff enthaltender Rückstand bis zu etwa 20 Gewichtsprozent aus der ersten Schicht im allgemeinen tolerierbar ist. Voraussetzung hierbei ist selbstverständlich, daß ein derartiger, Kohlenstoff enthaltender Rückstand mit dem Material des vorgeformten Körpers während des isostatischen Heißpressens nicht reagiert. Als Materialien für die erste Schicht können beispielsweise organische Wachse oder wachsähnliche Produkte sowie organische Harze oder harzähnliche Produkte natürlicher oder synthetischer Herkunft verwendet werden.

Beispiele hierfür sind pflanzliche Wachse, wie Candelilla- und Carnaubawachs; fossile Wachse, wie Montanwachs; tierische Wachse, wie Bienen- und Schellackwachs, Walrat und Lanolin; Mineralwachse, wie Ceresin-, Ozokerit- und Paraffinwachs; chemisch veränderte Wachse und synthetische Wachse, wie insbesondere Paraffine und daraus hergestellte Hartwachse; chemische Verbindungen oder Gemische dieser Verbindungen von wachsähnlicher Konsistenz bei Raumtemperatur, die üblicherweise aus Wachsen gewonnen werden oder synthetisch zugänglich sind, wie insbesondere gesättigte aliphatische Carbonsäuren mit 12 bis 30 Kohlenstoffatomen, vorzugsweise 14 bis 22 Kohlenstoffatomen, z. B. Myristin-, Pentadecan-, Palmitin-, Margarin-, Stearin-, Nonadecan-, Arachin- und Behensäure, deren Ester und Amide sowie Wachsalkohole und Fettamine; pflanzliche Harze, wie Coniferen- und Elemiharze; Harzsäuren, wie Diterpenderivate, z. B. Abietin- und Lävopimarsäure oder Harzsäuregemische; durch chemische Umsetzungen veränderte Naturharze und thermoplastische Kunststoffe, die gegebenenfalls durch Naturstoffe (Fette, Öle oder Naturharze) modifiziert sind, wie abgewandelte Naturstoffe, z. B. Celluloseester, oder rein synthetische Produkte, wie Polykondensate, z. B. Polycarbonate und Polyphenylenoxid; Polymerisate, z. B. Polyolefine, Polyacetate, Polyacrylate, und insbesondere polymere Fluorkohlenwasserstoffe, wie Polytetrafluoräthylen und Polytrifluorchloräthylen; ferner Polyaddukte, z. B. lineare Polyurethane.

Anstelle des organischen Materials kann als erste Schicht jedoch auch ein hitzebeständiges Material aufgebracht werden, das definitionsgemäß auf mindestens die Hälfte seines Volumens komprimierbar ist. Hierunter sind anorganische hitzebeständige Fasern, Faservliese oder Filze zu verstehen.

Beispiele hierfür sind Asbestfasern oder Asbestwolle; polykristalline Oxidfasern aus Zirkoniumoxid, Berylliumoxid, Magnesiumoxid und insbesondere aus Aluminiumoxid; polykristalline Fasern aus Bor, Borcarbid, Titanborid oder Siliciumcarbid und insbesondere polykristalline Fasern aus Kohlenstoff, Graphit oder Bornitrid, die aufgrund ihrer Beständigkeit bis zu 2500°C besonders dann bvorzugt sind, wenn die vorgeformten Körper, beispielsweise aus Titanborid, Siliciumnitrid oder Siliciumcarbid, eine hohe Verdichtungstemperatur erfordern. Anstelle der polykristallinen Fasern können selbstverständlich auch Einkristallfasern, sogenannte Whiskers, Verwendung finden, was aber aus wirtschaftlichen Gründen weniger in Betracht kommt.

Das Aufbringen der ersten Schicht kann mittels üblicher bekannter Maßnahmen vorgenommen werden. Wenn hierfür beispielsweise ein organisches Material verwendet wird, kann dieses in geschmolzenem Zustand, als Lösung in einem organischen Lösungsmittel oder in Aerosolform durch Tauchen, Sprühen, Bürsten, Spritzen oder Streichen aufgetragen und anschließend getrocknet werden. Mit dem hitzebeständigen Faser- oder Filzmaterial werden die vorgeformten Körper zweckmäßig umwickelt oder in dieses eingebettet, wobei es vorteilhaft ist, anschließend einen wasserundurchlässigen dünnen Film von etwa 1 bis 10 µm, beispielsweise aus einem harzähnlichen Produkt, aufzubringen.

Die Auswahl des Materials für die erste Schicht ist unabhängig von dem Material, aus dem der vorgeformte Körper besteht. Bei Verwendung des hitzebeständigen Faser- oder Filzmaterials muß aber selbstverständlich die geforderte Komprimierbarkeit bei den jeweils angewendeten Verdichtungstemperaturen während des isostatischen Heißpressens gewährleistet sein.

Die Schichtdicke ist abhängig von den Abmessungen der vorgeformten Körper sowie von der Volumenänderungsdifferenz zwischen dem vorgeformten Körper und dem zweiten oder eigentlichen Hüllmaterial, die durch unterschiedliche thermische Ausdehnung bzw. durch die Schwindung des Hüllmaterials durch die Temperaturerhöhung hervorgerufen wird. Je größer die vorgeformten Körper sind und je größer diese Volumenänderungsdifferenz ist, um so größer muß die Dicke der ersten Schicht gewählt werden. Mit Schichtdicken im Bereich von etwa 0,1 bis 3 mm, vorzugsweise von etwa 0,3 bis 1 mm, des organischen Materials und im Bereich von etwa 0,5 bis 10 mm, vorzugseise etwa 2 bis 6 mm, des Faser- oder Filzmaterials werden im allgemeinen befriedigende Ergebnisse erzielt.

Nachdem die erste Schicht aufgebracht und getrocknet worden ist, erfolgt das Aufbringen des eigentlichen Hüllmaterials in Form der zweiten oder äußeren Schicht aus glas- oder keramikartigem Material. Hierunter sind Werkstoffe aus Glas, Glaskeramik, Sinterglaskeramik und Oxidkeramik zu verstehen, die als Gemengesuspensionen aus den Werkstoffen selbst und/oder aus den Rohstoffen eingesetzt werden können.

Voraussetzung für die Auswahl des Materials der zweiten Schicht ist, daß das Hüllmaterial bzw. Bestandteile desselben bei direktem Kontakt mit dem Material des vorgeformten Körpers nicht mit diesem reagieren und daß die Hülle während des isostatischen Heißpressens bei der Verdichtungstemperatur plastisch verformbar sein muß.

Beispiele für Werkstoffe aus Glas sind niedrigschmelzende Borosilicatgläser, Alumosilicatgläser, hochschmelzende, sogenannte ®Vycorgläser (etwa 96% $SiO_2$ + 3% $B_2O_3$) und reines Kieselglas, die vorteilhaft in Form einer wäßrigen Glaspulversuspension zusammen mit einem organischen Bindemittel, wie Polyvinylalkohol oder Stearinsäure durch übliche Maßnahmen, wie Tauchen, Sprühen, Spritzen, Bürsten oder Streichen, aufgetragen werden.

Oxidkeramische Werkstoffe werden indessen vorteilhaft als keramische Massen aus Oxiden, wie $Al_2O_3$, $SiO_2$, $MgO$, $ZrO_2$ und/oder $CaO$, insbesondere in Form von viskos eingestellten Gemengesuspensionen (Schlicker), wobei gegebenenfalls zur Verflüssigung der Masse Natriumcarbonat und/oder Natriumsilicate zugesetzt worden sind, gegebenenfalls zusammen mit einem organischen Bindemittel, mittels der gleichen Maßnahmen aufgetragen. Die keramischen Massen sollten jedoch einen Schmelzphasenanteil bei der Verdichtungstemperatur während des isostatischen Heißpressens von mindestens 4 Gewichtsprozent, vorzugsweise etwa 10 Gewichtsprozent, aufweisen, was z. B. durch Zusatz von glasbildenden Rohstoffen, wie Feldspäten in Verbindung mit $SiO_2$ erreicht werden kann. Beim Dichtsintern derartiger Massen ist eine Volumenschwindung zu berücksichtigen, die jedoch etwa 20% nicht übersteigen sollte. Unter diesen Bedingungen ist es möglich, Verdichtungstemperaturen beim isostatischen Heißpressen bis zu 2000°C zu erreichen, wie sie beispielsweise für die Verdichtung von vorgeformten Körpern aus Siliciumcarbid erforderlich sind.

Nach dem Aufbringen der zweiten Schicht aus dem glas- oder keramikartigen Material werden die vorgeformten Körper erneut getrocknet, beispielsweise durch langsames Aufheizen bis etwa 120°C. Die Dicke der zweiten Schicht nach dem Trocknen beträgt im allgemeinen etwa 0,1 bis 3 mm, vorzugsweise etwa 0,5 bis 0,8 mm.

Anschließend werden die gehüllten Körper einer thermischen Behandlung unterzogen, die bei Verwendung eines organischen Materials für die erste Schicht vorteilhaft in zwei Stufen vorgenommen wird: Die Körper werden unter Normaldruck zunächst auf Temperaturen von etwa 400°C erhitzt, wobei die erste Schicht schmilzt oder sich zersetzt unter Bildung eines Hohlraums zwischen Körper und der zweiten Schicht. Dann wird unter vermindertem Druck (etwa 10⁻¹ mbar) weiter erhitzt, bis die zweite Schicht gasdicht geschmolzen oder gesintert ist. Bei Verwendung eines hitzebeständigen Materials für die erste Schicht kann die thermische Behandlung in einer Stufe vorgenommen werden, das heißt, die gehüllten Körper werden ohne Vorerhitzen direkt unter vermindertem Druck bis zum gasdichten Schmelzen oder Sintern der zweiten Schicht erhitzt.

Schließlich werden die so vorbehandelten Körper im Hochdruckautoklaven auf die erforderliche Verdichtungstemperatur der Körper erhitzt unter langsamer Erhöhung des Druckes auf etwa 1500 bis 3000 bar, wobei als inerte Gase für die Druckübertragung vorzugsweise Argon oder Stickstoff verwendet werden.

Grundsätzlich ist es möglich, die thermische Behandlung und die heißisostatische Verdichtung im Hochdruckautoklaven selbst durchzuführen. Die thermische Behandlung kann jedoch auch in einem anderen Ofen vorgenommen werden, z. B. in einem Kammerofen oder einem kontinuierlich betriebenen Tunnelofen. In diesem Fall muß durch langsames Abkühlen der gehüllten Körper dafür gesorgt werden, daß die Hüllen während der Überführung der Körper in den Hochdruckautoklaven nicht brüchig werden. Es ist daher vorteilhaft, nur die gegebenenfalls erforderliche erste Stufe der thermischen Behandlung in einem anderen Ofen durchzuführen, damit der Hochdruckautoklav nicht durch Zersetzungsrückstände aus der ersten Schicht verunreinigt wird. Die vollständige Verdichtung der gehüllten Körper bei der hierfür erforderlichen Temperatur unter dem angegebenen Druck ist im allgemeinen nach etwa 1 bis 2 Stunden erreicht. Dann werden Druck und Temperatur langsam erniedrigt, die abgekühlten Körper aus dem Autoklaven entnommen und durch einfaches Abklopfen oder durch Sandstrahlen von der Hülle befreit. Eine aufwendigere Nachbehandlung, auch von kompliziert geformten Körpern, ist im allgemeinen nicht erforderlich.

Mit Hilfe des erfindungsgemäßen Verfahrens ist es somit erstmals möglich, auch komplizierte vorgeformte Körper mit offener Porosität aus pulverförmigen Werkstoffen, die hohe Verdichtungstemperaturen erfordern, wie solche aus Siliciumnitrid, Titanborid und insbesondere Siliciumcarbid, dem heißisostatischen Preßvorgang zu unterziehen, ohne daß das hierzu benötigte, nicht vorgefertigte Hüllmaterial aus glas- oder keramikartigen Werkstoffen, das den Anforderungen der plastischen Verformbarkeit in diesem Temperaturbereich genügt, beim Aufheizen, wenn es noch nicht plastisch verformbar ist, wegen auftretender Volumenänderungsdifferenzen vorzeitig durch nicht mehr ausheilbare Risse zerstört wird. Die Körper sind somit während des Aufheizens beim isostatischen Heißpressen wirksam gegen das unerwünschte Eindringen des Druckgases in die noch offenen Poren geschützt.

Das erfindungsgemäße Verfahren eignet sich aber in gleicher Weise auch für die Verdichtung von vorgeformten Körpern aus pulverförmigen Werkstoffen, die zur vollständigen Verdichtung weniger hohe Temperaturen benötigen, wie solche aus Wolframcarbid und Cobalt als Bindemetall, wobei dann als Hüllmaterial eine in diesem Temperaturbereich plastisch verformbare Glas- oder glasähnliche Masse ausgewählt wird.

Das erfindungsgemäße Verfahren ist somit universell anwendbar, unabhängig von dem Material, aus dem der vorgeformte Körper besteht.

In den folgenden Beispielen wird das erfindungsgemäße Verfahren näher erläutert. Hierin bedeuten alpha den linearen thermischen Ausdehnungskoeffizienten und TD die theoretische Dichte.

Beispiel 1

(a) Aus pulverförmigem Wolframcarbid mit 6 Gew.-% Cobalt als Bindemetall wurden in einer Matrize aus Hartmetall durch Gesenkpressen würfelförmige Körper einer Kantenlänge von 20 mm hergestellt, Dichte: 10,5 g/cm³ = 72,51% TD; alpha ≈ 5,5 × 10⁻⁶/K.

(b) Auf einen nach (a) hergestellten Würfel wurde als erste Schicht ein Polytetrafluoräthylen in Aerosolform durch Sprühen aufgetragen und getrocknet. Die Schichtdicke nach dem Trocknen betrug 0,3 mm. Als zweite Schicht wurde eine wäßrige Suspension aus einem Glaspulver, bestehend aus 65 Gew.-% SiO₂, 20 Gew.-% Al₂O₃, 5 Gew.-% B₂O₃, 6 Gew.-% CaO und 4 Gew.-% MgO; alpha ≈ 3 × 10⁻⁶/K, mit 3 Gew.-% Polyvinylalkohol als organischem Bindemittel durch Tauchen aufgebracht und getrocknet. Die Dicke dieser zweiten Schicht nach dem Trocknen betrug 0,7 mm.

Der gehüllte Würfel wurde dann in einem Rohrofen auf 400°C unter Normaldruck erhitzt, wobei sich die erste Schicht zersetzte. Dann wurde der gehüllte Würfel in den Hochdruckautoklaven gebracht und unter vermindertem Druck (10⁻¹ mbar) 15 Minuten auf 950°C erhitzt zum Dichtschmelzen der Glaspulverschicht. Anschließend wurde der Druck langsam erhöht und der Würfel 1 Stunde bei 1360°C und 1000 bar Argondruck heißisostatisch verdichtet.

Die Enddichte des enthüllten Würfels betrug 14,45 g/cm³, das entspricht ca. 100% TD.

(c) Auf einen nach (a) hergestellten Würfel wurde als erste Schicht ein Graphitfilz von 2 mm Dicke geklebt und darauf ein dünner, wasserunlöslicher Film von etwa 5 μm Dicke durch Aufsprühen von Polytetrafluoräthylen in Aerosolform aufgebracht.

Dann wurde, wie unter (b) beschrieben, eine zweite Schicht aus Glaspulver aufgebracht und getrocknet (Schichtdicke 0,7 mm). Anschließend wurde der gehüllte Würfel ohne Vorerhitzen in den Hochdruckautoklaven gebracht und, wie unter (b) beschrieben, die Hülle vakuumdicht geschmolzen und der Würfel heißisostatisch verdichtet.

Die Enddichte des enthüllten Würfels betrug 14,48 g/cm³, das entspricht 100% TD.

## Beispiel 2

(a) Aus pulverförmigem Titandiborid wurden durch einfaches Heißpressen Scheiben von 70 mm Durchmesser und 20 mm Höhe hergestellt, Dichte: 4,16 g/cm³ = 92,43% TD; alpha $\approx 7,0 \times 10^{-6}$/K.

(b) Auf eine nach (a) hergestellte Scheibe wurde durch Eintauchen in geschmolzenes Paraffinwachs eine erste Schicht von 1,0 mm Dicke aufgebracht. Als zweite Schicht wurde eine wäßrige Aufschlämmung von Kieselglaspulver (alpha $\approx 1 \times 10^{-6}$/K) mit 3 Gew.-% Stearinsäure als organischem Bindemittel durch Tauchen aufgebracht und getrocknet. Die Dicke dieser zweiten Schicht nach dem Trocknen betrug 0,5 mm.

Die gehüllte Scheibe wurde dann in einem Rohrofen auf 200°C unter Normaldruck erhitzt, wobei die erste Schicht ausgeschmolzen wurde. Dann wurde die gehüllte Scheibe in den Hochdruckautoklaven gebracht und unter vermindertem Druck ($10^{-1}$ mbar) 15 Minuten auf 1600°C erhitzt zum Dichtschmelzen der Kieselglashülle. Anschließend wurde der Druck langsam erhöht und die Scheibe 1 Stunde bei 1750°C und 2000 bar Argondruck heißisostatisch verdichtet.

Die Enddichte der enthüllten Scheibe betrug 4,46 g/cm³ = 99,1% TD.

(c) Auf eine nach (a) hergestellte Scheibe wurde als erste Schicht ein Aluminiumoxidfilz von 4 mm Dicke geklebt und darauf ein dünner, wasserunlöslicher Film von etwa 5 µm Dicke durch Aufsprühen von Polytetrafluoräthylen in Aerosolform aufgebracht.

Dann wurde, wie unter (b) beschrieben, eine zweite Schicht aus Kieselglaspulver aufgebracht und getrocknet (Schichtdicke 0,5 mm). Anschließend wurde die gehüllte Scheibe ohne Vorerhitzen in den Hochdruckautoklaven gebracht und, wie unter (b) beschrieben, die Hülle vakuumdicht geschmolzen und die Scheibe heißisostatisch verdichtet.

Die Enddichte der enthüllten Scheibe betrug 4,48 g/cm³ = 99,3% TD.

## Beispiel 3

(a) Aus pulverförmigem alpha-Siliciumcarbid und 0,4 Gew.-% Aluminiumpulver als Sinterhilfsmittel wurden durch isostatisches Pressen bei Raumtemperatur Zylinder von 30 mm Durchmesser und 50 mm Höhe hergestellt, Dichte: 1,98 g/cm³ = 61,68% TD; alpha $\approx 5 \times 10^{-6}$/K.

(b) Auf einen nach (a) hergestellten Zylinder wurde eine erste Schicht aus Stearinsäure, gelöst in Aceton, durch Tauchen aufgebracht und getrocknet. Die Schichtdicke nach dem Trocknen betrug 1,0 mm. Als zweite Schicht wurde ein Keramikschlicker, bestehend aus 95,0 Gew.-% $Al_2O_3$, 4,0 Gew.-% $SiO_2$, 0,3 Gew.-% MgO und 0,7 Gew.-% Alkalien + Erdalkalien, durch Streichen aufgetragen (alpha $\approx 5 \times 10^{-6}$/K; zu berücksichtigende Schwindung beim Sintern ca. 2%) und getrocknet. Die Dicke dieser zweiten Schicht nach dem Trocknen betrug 0,8 mm.

Der gehüllte Zylinder wurde dann in einem Rohrofen auf 300°C unter Normaldruck erhitzt, wobei die erste Schicht ausgeschmolzen wurde.

Dann wurde der gehüllte Zylinder in den Hochdruckautoklaven gebracht und unter vermindertem Druck ($10^{-1}$ mbar) 15 Minuten auf 1650°C erhitzt zum Dichtsintern der Keramikschicht. Anschließend wurde der Druck langsam erhöht und der Zylinder zwei Stunden bei 1900°C und 2000 bar Argondruck heißisostatisch verdichtet.

Die Enddichte des enthüllten Zylinders betrug 3,19 g/cm³ = 99,4% TD.

(c) Auf einen nach (a) hergestellten Zylinder wurde als erste Schicht ein Graphitfilz von 6 mm Dicke geklebt und darauf ein wasserunlöslicher Film von etwa 5 µm Dicke durch Aufsprühen von Polytetrafluoräthylen in Aerosolform aufgebracht.

Dann wurde, wie unter (b) beschrieben, ein Keramikschlicker als zweite Schicht aufgebracht und getrocknet (Schichtdicke 0,8 mm). Anschließend wurde der gehüllte Zylinder ohne Vorerhitzen in den Hochdruckautoklaven gebracht und, wie unter (b) beschrieben, die Hülle vakuumdicht gesintert und der Zylinder heißisostatisch verdichtet.

Die Enddichte des enthüllten Zylinders betrug 3,21 g/cm³ = 100% TD.

## Patentansprüche

1. Verfahren zur Herstellung von praktisch porenfreien, polykristallinen Formkörpern aus vorgeformten Körpern mit zur Oberfläche offenen Poren in einer vakuumdicht geschlossenen Hülle aus glasartigem Material durch isostatisches Heißpressen im Hochdruckautoklaven unter Verwendung eines inerten Gases als Druckübertragungsmedium, dadurch gekennzeichnet, daß auf die vorgeformten Körper eine erste Schicht aus einem organischen Material, das bei Temperaturen bis zu 400°C unter Normaldruck zersetzlich oder schmelzbar ist, oder aus einem hitzebeständigen Material, das auf mindestens die Hälfte seines Volumens komprimierbar ist, aufgebracht und darauf eine zweite Schicht aus einem glas- oder keramikartigen Material aufgetragen wird, dann die gehüllten Körper thermisch behandelt werden, bis die zweite Schicht unter Bildung der vakuumdichten Hülle geschmolzen oder gesintert ist und die so vorbehandelten Körper anschließend isostatisch heißgepreßt werden bis zur Bildung der praktisch porenfreien, polykristallinen Formkörper.

2. Verfahren nach Anspruch 1, dadurch gekennzeichnet, daß für die erste Schicht ein organisches Wachs der wachsähnliches Produkt natürlicher oder synthetischer Herkunft verwendet wird.

3. Verfahren nach Anspruch 1, dadurch gekennzeichnet, daß für die erste Schicht ein organisches Harz oder harzähnliches Produkt natürlicher oder synthetischer Herkunft verwendet wird.

4. Verfahren nach Anspruch 1, dadurch gekennzeichnet, daß für die erste Schicht anorganische, hitzebeständige Fasern, Faservliese oder Filze verwendet werden.

5. Verfahren nach Anspruch 1 und 4, dadurch gekennzeichnet, daß für die erste Schicht Asbestfasern oder Asbestwolle verwendet werden.

6. Verfahren nach Anspruch 1 und 4, dadurch gekennzeichnet, daß für die erste Schicht polykristalline Fasern aus Aluminiumoxid, Kohlenstoff, Graphit oder Bornitrid verwendet werden.

7. Verfahren nach Anspruch 1, dadurch gekennzeichnet, daß für die zweite Schicht eine Gemengesuspension aus Glaspulver oder glasbildenden Rohstoffen verwendet wird.

8. Verfahren nach Anspruch 1, dadurch gekennzeichnet, daß für die zweite Schicht eine viskos eingestellte Gemengesuspension aus Oxide und mindestens 4 Gew.-% glasbildenden Rohstoffen verwendet.

9. Verfahren nach Anspruch 1, dadurch gekennzeichnet, daß die gehüllten Körper einer ersten thermischen Behandlung bei Temperaturen bis zu 400°C unter Normaldruck und anschließend einer zweiten thermischen Behandlung bei der Schmelz- oder Sintertemperatur der glas- oder keramikartigen Schicht unter vermindertem Druck unterzogen werden.

## Claims

1. Process for the manufacture of substantially pore-free shaped polycrystalline articles from preformed articles having pores open to the surface, in a vacuum-sealed casing of vitreous material by means of isostatic hot-pressing in a high-pressure autoclave using an inert gas as pressure-transfer medium, characterized in that a first layer of an organic material that can be decomposed or melted at temperatures of up to 400°C under normal pressure, or of a heat-resistant material that is compressible to at least half its volume, is applied to the preformed articles and a second layer consisting of a vitreous or ceramic-like material is applied thereto, the encased articles are subsequently thermally treated until the second layer is fused or sintered to form the vacuum-tight casing and subsequently the articles pretreated in this manner are isostatically hot-pressed until the substantially pore-free shaped polycrystalline articles are formed.

2. Process according to claim 1, characterized in that an organic wax or wax-like product of natural or synthetic origin is used for the first layer.

3. Process according to claim 1, characterized in that an organic resin or resin-like product of natural or synthetic origin is used for the first layer.

4. Process according to claim 1, characterized in that inorganic, heat-resistant fibers, non-woven materials or felts are used for the first layer.

5. Process according to claims 1 and 4, characterized in that asbestos fiber or asbestos wool is used for the first layer.

6. Process according to claims 1 and 4, characterized in that polycrystalline fibers of aluminium oxide, caron, graphite or boron nitride are used for the first layer.

7. Process according to claim 1, characterized in that a suspension of a mixture of glass powder or glass-forming raw materials is used for the second layer.

8. Process according to claim 1, characterized in that a suspension of a mixture that has been rendered viscous and comprises oxides and at least 4% by weight of glass-forming raw materials is used for the second layer.

9. Process according to claim 1, characterized in that the encased articles are subjected to a first thermal treatment at temperatures up to 400°C under normal pressure and then to a second thermal treatment at the fusing or sintering temperature of the vitreous or ceramic-like layer under reduced pressure.

## Revendications

1. Procédé pour produire des objets conformés ou moulés, polycristallins, pratiquement sans pores, à partir d'objets préformés comportant des pores ouverts à la surface, dans une enveloppe close étanche au vide en une matière analogue à du verre, par compression isostatique à chaud dans des autoclaves pour pression élevée, avec utilisation d'un gaz inerte comme milieu de transmission de la pression, procédé caractérisé en ce qu'on applique sur l'objet préformé une première couche en une matière organique, qui peut se décomposer ou fondre à des températures allant jusqu'à 400°C sous la pression normale ou qui est en une matière réfractaire pouvant se comprimer jusqu'à la moitié au moins de son volume, et l'on applique par-dessus une seconde couche en une matière analogue à du verre ou à de la céramique, puis l'on traite par voie thermique l'objet ainsi enveloppé, jusqu'à fusion ou frittage de la seconde couche avec formation de l'enveloppe étanche au vide, et l'on effectue ensuite la compression isostatique à chaud de l'objet ainsi prétraité, jusqu'à formation de l'objet moulé ou conformé polycristallin, pratiquement sans pores.

2. Procédé selon la revendication 1, caractérisé en ce qu'on utilise pour la première couche une cire organique ou un produit analogue à de la cire, d'origine naturelle ou synthétique.

3. Procédé selon la revendication 1, caractérisé en ce qu'on utilise pour la première couche une résine organique ou un produit analogue à de la résine, d'origine naturelle ou synthétique.

4. Procédé selon la revendication 1, caractérisé en ce qu'on utilise pour la première couche des fibres, des nappes de fibres ou des feutres de fibres minérales réfractaires.

5. Procédé selon les revendications 1 et 4, caractérisé en ce qu'on utilise pour la première couche des fibres d'amiante ou de la laine d'amiante.

6. Procédé selon les revendications 1 et 4, caractérisé en ce qu'on utilise pour la première couche des fibres polycristallines d'oxyde d'aluminium, de carbone, de graphite ou de nitrure de bore.

7. Procédé selon la revendication 1, caractérisé en ce qu'on utilise pour la seconde couche une suspension de fritte de poudre de verre ou de matières premières génératrices d'un verre.

8. Procédé selon la revendication 1, caractérisé en ce qu'on utilise pour la seconde couche une suspension de fritte à viscosité réglée, formée d'oxydes et d'au moins 4% en poids de matières brutes génératrices d'un verre.

9. Procédé selon la revendication 1, caractérisé en ce qu'on soumet l'objet enveloppé à un premier traitement thermique à des températures jusqu'à 400°C sous la pression normale, puis à un second traitement thermique à la température de fusion ou de frittage de la couche de verre ou de matière analogue à de la céramique, sous pression réduite.